# EUROPÄISCHE PATENTANMELDUNG

(11) **EP 1 161 979 A1**
(43) Veröffentlichungstag der Anmeldung: **12.12.2001**
(21) Anmeldenummer: 01110404.9
(22) Anmeldetag: 27.04.2001
(51) Int. Cl.: B01D 53/32, B01D 53/86

(54) **Verfahren und Vorrichtung zur Reinigung von Abluft**

(30) Priorität: 08.06.2000 DE 10027802
(71) Anmelder: Markert, Jürgen, 71254 Ditzingen (DE)
(72) Erfinder: Markert, Jürgen, 71254 Ditzingen (DE)
(74) Vertreter: Späth, Dieter, Dipl.-Ing.

(57) **Zusammenfassung**

Die Erfindung betrifft ein Verfahren und eine Vorrichtung zur Reinigung von Abluft beispielsweise der chemischen Industrie, von Lackieranlagen oder Tierverwertungsanstalten. Zur Reinigung wird die Abluft durch einen Kondensator (12) durchgeleitet und dort einem elektrischen Wechselfeld (nicht-thermisches Plasma) ausgesetzt. Zur Steigerung der Effektivität und Verringerung des Energieverbrauchs schlägt die Erfindung vor, die Abluft zugleich katalytisch zu behandeln. Dies kann beispielsweise dadurch erfolgen, dass Platten (14) oder sonstige Elektroden des Kondensators (12) ein Dielektrikum (18) aufweisen, das mit einem Metallkatalysator (20) beschichtet ist.

## Beschreibung

Die Erfindung betrifft ein Verfahren und eine Vorrichtung zur Reinigung von Abluft mit den Merkmalen des Oberbegriffs des Anspruchs 1 oder 8.

Es ist bekannt, Abluft beispielsweise aus chemischen Fabriken, Lackieranlagen, Tierverwertungsanstalten zur Reinigung einem elektrischen Feld, insbesondere einem Wechselfeld, auszusetzen. Das elektrische Feld erzeugt lonen und Gasradikale, also Teilchen mit einer erhöhten chemischen Reaktivität. Dies bewirkt eine Reaktion und Abbau der in der Abluft enthaltenen Schadstoffe. Die vom elektrischen Feld in die Abluft eingebrachte Energie entspricht einer lonenund Elektronentemperatur von einigen 1000°C. Aufgrund der lonisation spricht man von einem Plasma. Da die tatsächliche Temperatur der Abluft zwischen Raumtemperatur und wenigen 100°C liegt, spricht man von einem nicht-thermischen Plasma.

Die bekannten Verfahren haben den Nachteil, dass sie einen hohen Leistungsbedarf aufweisen und deshalb wenig wirtschaftlich sind. Ihr Einsatz beschränkt sich deswegen bislang auf Sonderanwendungen.

Der Erfindung liegt die Aufgabe zugrunde, ein Verfahren und eine Vorrichtung zur Reinigung von Abluft mit einem elektrischen Feld vorzuschlagen, dessen Effektivität erhöht ist.

Diese Aufgabe wird erfindungsgemäß durch die Merkmale des Anspruchs 1 oder 8 gelöst. Gemäß der Erfindung erfolgt die Behandlung der Abluft mit einem elektrischen Feld in Anwesenheit eines Katalysators. Der Katalysator setzt eine Aktivierungsenergie zum Umwandeln oder Abbauen der Schadstoffe herunter. Durch den Katalysator wird der erforderliche Energieeintrag des elektrischen Feldes in die Abluft zu deren Reinigung herabgesetzt. Des weiteren verbessert der Katalysator Umwandlung und Abbau der Schadstoffe. Der Katalysator verringert die zur Reinigung der Abluft erforderliche Energie und verbessert die Effektivität der Reinigung.

Bei einer Ausgestaltung der Erfindung findet als Katalysator ein Metallkatalysator Verwendung. Es kommen sowohl Edel- als auch Unedelmetallkatalysatoren in Betracht. Der Katalysator kann beispielsweise auf ein Dielektrikum des Kondensators aufgedampft sein. Ist das Dielektrikum eine Keramik oder ein sonstiger poröser Werkstoff, kann der Metallkatalysator auch in das Dielektrikum diffundiert sein.

Als weiterer Katalysator finden bei einer Ausgestaltung der Erfindung Stickoxide Verwendung. In dem durch das elektrische Feld erzeugten nicht-thermischen Plasma wirken Stickoxide katalytisch. Sie setzen hier ebenso wie andere Katalysatoren die Aktivierungsenergie von in der Abluft enthaltenen Schadstoffen herab und erhöhen deren Reaktionsvermögen. Die Stickoxide können der Abluft vor dem Kondensator zugeführt werden. Vorteilhaft ist es, dass die Stickoxide in dem dem Kondensator zugeführten Abluftstrom erzeugt werden. Dies erfolgt beispielsweise durch Lichtbogenentladung. Eine Erzeugung der Stickoxide in dem dem Kondensator zugeführten Abluftstrom hat den Vorteil, dass keine Stickoxide zugeführt werden müssen. Der der Abluft zugeführte oder in ihr erzeugte Stickoxid-Anteil soll gering sein, da Stickoxide selbst als Schadstoffe angesehen werden und gesetzliche Grenzwerte zu beachten sind.

Als weitere Möglichkeit der katalytischen Behandlung der Abluft im elektrischen Feld führt eine Ausgestaltung der Erfindung der Abluft Feuchtigkeit zu. Auch Feuchtigkeit wirkt in dem nicht-thermischen Plasma, dem die Abluft ausgesetzt wird, katalytisch und erhöht das Reaktionsvermögen der in der Abluft enthaltenen Schadstoffe und verringert den Energiebedarf für die Reinigung der Abluft. Die drei genannten Möglichkeiten der katalytischen Behandlung der Abluft im elektrischen Feld, nämlich Metallkatalysator, Stickoxide und Feuchtigkeit können wahlweise einzeln oder in beliebiger Kombination angewandt werden.

Als weitere Möglichkeit, die Reaktionsfähigkeit der Schadstoffe zu erhöhen und deren Umwandlung oder Abbau zu verbessern, sieht eine Ausgestaltung der Erfindung die Bestrahlung mit UV-Licht im Kondensator vor. Da sich die absorbierte Lichtwellenlänge zumindest eines Teils der in der Abluft enthaltenen Schadstoffe im elektrischen Feld verschiebt, hat die Bestrahlung der Abluft mit UV-Licht im elektrischen Feld den Vorteil eines verbesserten Energieeintrags für die Reaktion der Schadstoffe. Durch das elektrische Feld ist die Absorption von UV-Licht durch die Schadstoffe und damit deren Reaktionsfähigkeit erhöht.

Eine weitere Ausgestaltung der Erfindung sieht vor, die Abluft zu erwärmen, bevor sie dem Kondensator zugeleitet wird. Die Erwärmung der Abluft hat zunächst den Vorteil, dass sie die Reaktionsfähigkeit allgemein erhöht und damit die Umwandlung und den Abbau der Schadstoffe fördert. Weiterer Vorteil der Erwärmung ist, dass ein Teil der Katalysatoren erst bei erhöhten Temperaturen mit guter Effektivität wirksam wird. Durch die Erwärmung der Abluft lässt sich der Katalysator bei seiner Betriebstemperatur nutzen.

Die Erfindung wird nachfolgend anhand eines in der Zeichnung dargestellten Ausführungsbeispiels näher erläutert. Es zeigen:
- Figur 1: schematisierte Darstellung einer erfindungsgemäßen Vorrichtung; und
- Figur 2: eine vergrößerte Darstellung einer Einzelheit der Vorrichtung aus Figur 1.

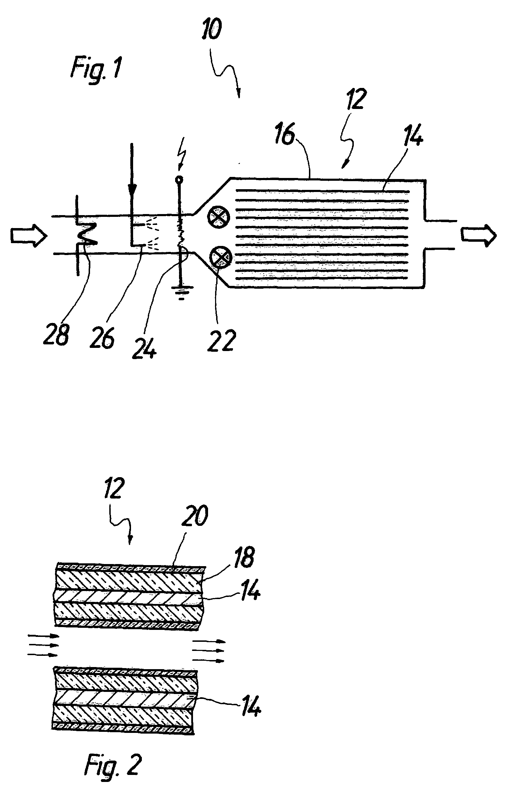

Die in Figur 1 dargestellte, erfindungsgemäße Vorrichtung 10 weist einen Kondensator 12 auf. Der Kondensator 12 ist im dargestellten und beschriebenen Ausführungsbeispiel als Plattenkondensator ausgebildet. Andere Kondensatorbauformen sind ebenso möglich. Platten (Elektroden) 14 des Kondensators 12 sind parallel zu- und mit Abstand voneinander in einem Gehäuse 16 angeordnet, das von Abluft durchströmbar ist. Zwei Platten 14 des Kondensators 12 sind in Figur 2 in vergrößerter Darstellung gezeigt. Die Platten 14 weisen beidseitig ein Dielektrikum 18 beispielsweise aus einem Glaswerkstoff auf. Der Kondensatorplatte 14 abgewandte Oberflächen der Dielektrika 18 sind mit einem Metallkatalysator 20 beschichtet. Wird als Dielektrikum 18 eine Keramik oder ein sonstiger, poröser Werkstoff verwendet, kann der Metallkatalysator 20 auch in die Oberfläche des Dielektrikums eindiffundiert sein. Zwischen den mit dem Katalysator 20 beschichteten Oberflächen der Dielektrika 18 besteht ein Spalt für das Durchströmen der zu reinigenden Abluft.

Im Gehäuse 16 des Kondensators 12 sind UV-Lampen 22 angeordnet, die das Innere des Gehäuses 16 und insbesondere die Zwischenräume zwischen den Platten 14 des Kondensators 12 mit UV-Licht beleuchten.

In Strömungsrichtung vor dem Gehäuse 16 sind Elektroden 24 für eine elektrische Entladung angeordnet. Des weiteren sind in Strömungsrichtung vor dem Kondensator 14 Wasserdüsen 26 zur Befeuchtung der Abluft angeordnet. Außerdem ist eine Wärmequelle 28 in Strömungsrichtung vor dem Kondensator 14 angeordnet, mit der die Abluft vor dem Eintritt in den Kondensator 14 erwärmbar ist. Die Wärmequelle 28 kann beispielsweise eine elektrische oder auch sonstige Heizung sein. In Industrieanlagen oder bei sonstigen Anwendungen, bei denen ansonsten ungenutzte Abwärme zur Verfügung steht, eignet sich ein Wärmetauscher als Wärmequelle 28, der die Abluft mit der ansonsten ungenutzten Abwärme wärmt.

Der Kondensator 12 wird mit einer Wechselspannung betrieben, deren Frequenz beispielsweise die Netzfrequenz von 50 Hz sein kann. Vorzugsweise wird eine höhere Frequenz von einigen 100 Hz bis einigen 1000 Hz (beispielsweise zwischen 400 Hz und 8000 Hz) gewählt. Bei einer niedrigen Frequenz wie beispielsweise der Netzfrequenz ist mit einem nur geringen Energieeintrag in die Abluft und infolgedessen mit einer verringerten Reinigung der Abluft zu rechnen. Höhere Frequenzen als der angegebene Bereich scheinen den Energieeintrag vom elektrischen Feld in die Abluft nicht signifikant zu steigern, sind allerdings grundsätzlich möglich. Die elektrische Feldstärke im Kondensator 12 beträgt bis zu etwa 50.000 V/cm.

Durch das elektrische Feld des Kondensators 12 wird Energie in die den Kondensator 12 durchströmende Abluft eingebracht, die Teilchen der Abluft werden in chemisch reaktionsfreudige oder reaktionsfähige Zustände versetzt. Die eingebrachte Energie wird von den Gasteilchen gespeichert, wobei die eingebrachte Energie einer lonen- und Elektronentemperatur von einigen 1000°C (beispielsweise 50.000°C und mehr) entspricht. Da die Temperatur im Kondensator 12 nicht oder nur unwesentlich erhöht ist, sie beträgt zwischen Umgebungstemperatur und einigen 100°C (beispielsweise 250 bis 300°C), spricht man auch von einem nicht-thermischen Plasma. Des weiteren werden lonen und chemische Radikale gebildet. Die in der Abluft enthaltenen Gasteilchen werden dissoziiert, sie reagieren miteinander und es werden dabei die Schadstoffe umgewandelt und abgebaut. So werden insbesondere organische Schadstoffe und Geruchsstoffe zu Wasser und Kohlendioxid abgebaut.

Durch die Anwesenheit des Katalysators 20 im Kondensator 12 werden die Umwandlungs- und Abbauprozesse beschleunigt und verbessert in dem Sinn, dass ein unvermeidbarer Rest an nicht abgebauten Schadstoffen verringert wird. Zusätzlich verringert der Katalysator 20 den erforderlichen Energieeintrag des elektrischen Feldes in die Abluft zum Abbau der Schadstoffe. Letzteres bedeutet, dass die zur Reinigung der Abluft notwendige Energie geringer ist.

Als weiteren Katalysator zur Steigerung der Effektivität des Kondensators 12 bei der Reinigung der Abluft ist im Ausführungsbeispiel die Einbringung von Stickoxiden in die Abluft vorgesehen. Dies kann beispielsweise durch Zugabe aus Druckgasflaschen erfolgen. Im dargestellten Ausführungsbeispiel werden durch elektrische Lichtbogenentladung zwischen den Elektroden 24 Stickoxide in der dem Kondensator 12 zuströmenden Abluft erzeugt. Auch die Stickoxide wirken katalytisch auf die durch das elektrische Feld erzeugten Teilchen, sie beschleunigen und verbessern den Abbau der enthaltenen Schadstoffe. Die vom elektrischen Feld im Kondensator 12 in die Abluft eingetragene, zur Umwandlung und zum Abbau der Schadstoffe erforderliche Energie wird durch die Anwesenheit von Stickoxiden verringert. Die Einbringung bzw. Erzeugung der hier katalytisch wirkenden Stickoxide in der Abluft wird zwar vorzugsweise zusätzlich zum Metallkatalysator 20 auf den Platten 14 des Kondensators 12 angewendet, grundsätzlich ist der Betrieb des Kondensators 12 zur Reinigung der Abluft auch ausschließlich mit den Stickoxiden als Katalysator möglich.

Als weitere Möglichkeit der katalytischen Behandlung der Abluft sieht das dargestellte und beschriebene Ausführungsbeispiel der Erfindung die Zufuhr von Feuchtigkeit in die Abluft beispielsweise durch Einspritzen von Wasser mit den Wasserdüsen 26 in die dem Kondensator 12 zuströmende Abluft vor. Auch die Feuchtigkeit verbessert die Umwandlung und den Abbau der in der Abluft enthaltenen Schadstoffe. Die Erhöhung der Feuchtigkeit der dem Kondensator 12 zuströmenden Abluft ist als zusätzliche Maßnahme zum Metallkatalysator 20 im Kondensator 12 und der Stickoxid-Erzeugung zur weiteren Effektivitätssteigerung des Kondensators 12 bei der Reinigung der Abluft vorgesehen. Grundsätzlich kann auch diese Maßnahme für sich allein, also ohne den Metallkatalysator 20 und ohne die Stickoxid-Erzeugung angewendet werden.

Durch die UV-Lampen 22 wird die Abluft UV-Licht ausgesetzt, während sie sich im elektrischen Feld zwischen den Platten 14 des Kondensators 12 befindet. In Anwesenheit von Sauerstoff wirkt UV-Licht begünstigend auf die Oxidation von Schadstoffen und damit auf die Umwandlung der Schadstoffe in unschädliche Stoffe. Das elektrische Feld des Kondensators 12 verschiebt die von den Gasteilchen absorbierte Lichtwellenlänge. Dadurch wird zumindest bei einem Teil der organischen, in der Abluft enthaltenen Schadstoffe die Absorbtionsfähigkeit im UV-Bereich erhöht. Der Energieeintrag durch das UV-Licht in die Schadtsoffe wird durch das elektrische Feld erheblich gesteigert und die Effektivität des Kondensators 12 zur Reinigung der Abluft weiter heraufgesetzt.

Mit der Wärmequelle 28 wird die Abluft vor dem Eintritt in den Kondensator 12 erwärmt. Dadurch wird auch die Temperatur im Kondensator 12 erhöht. Dies hat zunächst den Effekt, dass generell chemische Reaktionen wie der Abbau der in der Abluft enthaltenen Schadstoffe bei höheren Temperaturen besser ablaufen. Dies ist allerdings nur ein Nebenaspekt. Hauptaspekt der Temperaturerhöhung ist, dass Metallkatalysatoren 20 vielfach erst bei erhöhten Temperaturen von beispielsweise 250°C bis 300°C, der sog. Betriebstemperatur eine gute Wirksamkeit haben. Bei niedrigen Temperaturen sind solche Katalysatoren teilweise nahezu inaktiv. Durch die Erwärmung der dem Kondensator 12 zugeführten Abluft und ggf. auch durch das am Kondensator 12 anliegende elektrische Wechselfeld wird die Temperatur des Kondensators 12 auf die Betriebstemperatur des Metallkatalysators 20 erhöht.

## Patentansprüche

1. Verfahren zur Reinigung von Abluft, wobei die Abluft einem elektrischen Feld ausgesetzt wird, **dadurch gekennzeichnet, dass** im elektrischen Feld ein Katalysator vorhanden ist.

2. Verfahren nach Anspruch 1, **dadurch gekennzeichnet, dass** das elektrische Feld ein Wechselfeld ist.

3. Verfahren nach Anspruch 1 oder 2, **dadurch gekennzeichnet, dass** der Katalysator ein Metallkatalysator ist.

4. Verfahren nach Anspruch 1 oder 2, **dadurch gekennzeichnet, dass** der Katalysator ein Stickoxid ist.

5. Verfahren nach Anspruch 1 oder 2, **dadurch gekennzeichnet, dass** der Abluft vor oder während der Beaufschlagung mit dem elektrischen Feld Feuchtigkeit zugeführt wird.

6. Verfahren nach einem der Ansprüche 1 bis 5, **dadurch gekennzeichnet, dass** die dem elektrischen Feld ausgesetzte Abluft mit UV-Licht bestrahlt wird.

7. Verfahren nach einem der Ansprüche 1 bis 6, **dadurch gekennzeichnet, dass** die Abluft erwärmt wird, bevor sie dem elektrischen Feld ausgesetzt wird.

8. Vorrichtung zur Reinigung von Abluft, mit einem Kondensator zum Durchleiten der Abluft, **dadurch gekennzeichnet, dass** der Kondensator (12) einen Katalysator (20) aufweist.

9. Vorrichtung nach Anspruch 8, **dadurch gekennzeichnet, dass** der Kondensator (12) ein Dielektrikum (18) aufweist.

10. Vorrichtung nach Anspruch 8 oder 9, **dadurch gekennzeichnet, dass** der Kondensator (12) einen Metallkatalysator (18) aufweist.

11. Vorrichtung nach Anspruch 8 oder 9, **dadurch gekennzeichnet, dass** der Kondensator (12) mit Stickoxid als Katalysator beaufschlagt wird.

12. Vorrichtung nach Anspruch 11, **dadurch gekennzeichnet, dass** dem Kondensator (12) Elektroden (24) zur Erzeugung eines Lichtbogens vorgeschaltet sind.

13. Vorrichtung nach Anspruch 8 oder 9, **dadurch gekennzeichnet, dass** der Kondensator 12 mit Feuchtigkeit als Katalysator beaufschlagt wird.

14. Vorrichtung nach einem der Ansprüche 8 bis 13, **dadurch gekennzeichnet, dass** die Vorrichtung (10) eine UV-Lichtquelle (22) aufweist, deren Licht in den Kondensator (12) strahlt.

15. Vorrichtung nach einem der Ansprüche 8 bis 14, **dadurch gekennzeichnet, dass** dem Kondensator (12) eine Wärmequelle (28) vorgeschaltet ist.
